# EUROPEAN PATENT SPECIFICATION

(11) **EP 3 256 519 B1**
(45) Date of publication and mention of the grant of the patent: **21.10.2020**
(21) Application number: 16714573.9
(22) Date of filing: 12.02.2016
(51) Int. Cl.: C08K 5/101, C08J 5/18, C08L 67/02, C08L 67/04

(54) **POLYESTER PRODUCTS**
POLYESTERPRODUKTE
PRODUITS EN POLYESTER

(30) Priority: 13.02.2015 EP 15155089
(43) Date of publication of application: 20.12.2017
(73) Proprietor: Holland Colours N. V., 7323 RW Apeldoorn (NL)
(72) Inventor: HURENKAMP, Johannes Henricus, 7323 RW Apeldoorn (NL); ROELOFS, Jules Caspar Albert Anton, 7323 RW Apeldoorn (NL); MARISSEN, Jeroen, 7323 RW Apeldoorn (NL)
(74) Representative: V.O.
(86) International application number: PCT/NL2016/050103
(87) International publication number: WO 2016/130011

(56) References cited:
- WO-A1-01/74935
- WO-A1-2013/156760
- GB-A- 2 411 656
- US-A- 5 891 943

## Description

The invention is directed to a film of preform for a bottle, to a polyester composition suitable for preparing a film or preform for a bottle, and to the use of certain organic esters as slip agent for specific polyesters.

The present invention thus relates to polymer additives having the property of reducing the coefficient of friction, *i.e.* being a slip agent. It is particularly applicable to polyethylene terephthalate (PET), polyethylene terephthalate glycol-modified (PETG), and polylactic acid (PLA).

Polyethylene terephthalate is an important plastics material, widely used in the manufacture of moulded polyester articles and films. The key advantages of using PET are: high clarity, light weight, good processability and being unbreakable in comparison to glass.

Largely as a consequence of the above properties, a very important application for PET homopolymer and copolymers is in the manufacture of plastic bottles and jars. Another important application is in the manufacture of plastic film.

PET bottles are produced predominantly using a two stage stretch blow moulding process. Firstly a preform is produced by injection moulding. This is a relatively thick-walled part, with the neck features moulded during this process. The preform is then reheated in a reheat blow machine that stretches the preform by a stretching pin and inflates it by blowing pressurized air into the preform to give the desired shape. This gives a biaxially orientated container that provides improved properties such as clarity and mechanical strength. This is especially important for carbonated water and carbonated soft drink containers. Jars are mostly used for packaging of cosmetic products.

Films may be prepared using the known methods for producing unstretched, uni-axially stretched or biaxially stretched film.

A major difficulty in fabricating articles such as preforms or films from polyesters, more in particular from PET and PETG is the relatively high coefficient of friction of the polymer. In the manufacture of bottles this problem can manifest itself in a number of ways, namely in the first place a less than optimum packing density when preforms are packed into a box, with concomitant higher storage and transportation costs; in the second place a poor flow on conveying equipment and hence reduced throughput and finally surface defects due to poor scratch resistance and scuff marks caused by the impact of falling preforms on top of each other during release into the packing box and during conveying of preforms in general.

There is thus a need for an effective additive system for polyesters that reduces the coefficient of friction of the polymer and thus overcomes the above deficiencies.

Additives that are effective in reducing the coefficient of friction of the surface of polymer products are known in the industry as slip agents. However, in order to be acceptable for beverage containers, the fabricated polyester product containing the slip agent must exhibit low colour shift and high clarity, a minimum effect on taste and odour of the packaged good (e.g. food stuff). Further the agent has to be non-toxic. This imposes other important requirements on a slip agent in addition to its friction-reducing properties.

Generally organic slip agents are ester amides and aliphatic esters. However, the known slip agents do not perform sufficiently well and accordingly there is need for improvement. Some slip agents have the disadvantage of a melting point slightly above ambient temperatures in industrial environment, which makes them difficult to handle in such environment. To overcome this, masterbatch concentrates with typically lower loadings than 50 % are used, hence with a much lower effectivity.

There have been some efforts in the art for providing improved slip agents.

GB-A-2 411 656 discloses ethylhexyl stearate as a possible slip additive in a polyester polymer. This compound is an ester of ethylhexanol (branched alcohol having 8 carbon atoms) and stearic acid (linear fatty acid with 18 carbon atoms). This compound may not sufficiently reduce the coefficient of friction. GB-A-2 411656 further discloses a non-transparent polyester composition.

WO-A-2013/156760 describes a processing aid additive for a polyester composition which comprises a simple ester of a branched chain fatty acid monocarboxylic acid and a branched chain monohydric alcohol.

WO-A-01/74935 is directed to polycarbonate compositions that further comprise ester compounds prepared from a linear alcohol and a branched chain fatty acid compound.

US-A-5 891 943 describes a thermoplastic resin composition comprising a thermoplastic polyester resin, a rubber-modified styrenic resin, and an olefinic copolymer composed of an olefinic polymer fragment and at least on e fragment of a vinyl-series polymer. The composition additionally comprises a branched chain and/or an alcohol having at least one branched chain. The presence of rubbers renders the composition non-transparent.

It has now been found that certain specific aliphatic esters show an excellent performance as slip agent in specific polyesters. More in particular, esters of an aliphatic alkanol having the formula R-OH, wherein R stands for a branched chain alkyl group having 12-18 carbon atoms, and an aliphatic fatty acid having the formula R¹-COOH, wherein R¹ stands for a straight chain alkyl group having 11-21 carbon atoms, and wherein the esters are liquid at 25 °C, are extremely suitable.

In a first embodiment the invention is accordingly directed to a preform for a bottle or to a film, comprising a polyester material selected from the group of polyethylene terephthalate, virgin bottle grade polyethylene terephthalate, postconsumer polyethylene terephthalate, polyethylene terephthalate glycol-modified (PETG), polyethylene naphthalate, polybutylene terephthalate, and polylactic acid, and at least one slip agent, said slip agent being an ester of an aliphatic alkanol having the formula R-OH, wherein R stands for a branched chain alkyl group having 12-18 carbon atoms, and an aliphatic fatty acid having the formula R¹-COOH, wherein R¹ stands for a straight chain alkyl group having 11-21 carbon atoms, and wherein the slip agent is liquid at 25 °C.

In a second embodiment the invention is directed to a polyester composition suitable for preparing a film or a preform for a bottle, comprising a polyester material selected from the group of polyethylene terephthalate, virgin bottle grade polyethylene terephthalate, postconsumer polyethylene terephthalate, polyethylene terephthalate glycol-modified (PETG), polyethylene naphthalate, polybutylene terephthalate, and polylactic acid, and at least one slip agent in an amount of 0.01-2 wt.% based on the weight of the polyester composition, said slip agent being an ester of an aliphatic alkanol having the formula R-OH, wherein R stands for a branched chain alkyl group having 12-18 carbon atoms, and an aliphatic fatty acid having the formula R¹-COOH, wherein R¹ stands for a straight chain alkyl group having 11-21 carbon atoms, and wherein the slip agent is liquid at 25 °C, and wherein the polyester composition is transparent.

In a third embodiment the invention is directed to the use of at least one ester of an aliphatic alkanol having the formula R-OH, wherein R stands for a branched chain alkyl group having 12-18 carbon atoms, and an aliphatic fatty acid having the formula R¹-COOH, wherein R¹ stands for a straight chain alkyl group having 11-21 carbon atoms, and wherein said ester is liquid at 25 °C, as a slip agent in a polyester composition, said polyester being selected from the group of polyethylene terephthalate, virgin bottle grade polyethylene terephthalate, postconsumer polyethylene terephthalate, polyethylene terephthalate glycol-modified (PETG), polyethylene naphthalate, polybutylene terephthalate, and polylactic acid, and wherein the polyester composition is transparent.

All embodiments have in common the superior performance of the specific slip agents defined therein.

According to a preferred embodiment R¹ is a straight chain alkyl group having 11-18 carbon atoms. More preferably, R¹ is a straight chain alkyl group having 11-17 carbon atoms. Even more preferably, R¹ is a straight chain alkyl group having 17 carbon atoms. In an embodiment R¹ is C11 or C17. R is preferably an 11-methyl-dodecane moiety.

In this respect it is to be noted that the aliphatic alkanols may consist of a mixture of various isomers, as is well known in the art. For example, in 11-methyl-dodecanol, the methyl group will predominantly be present on the 11 position, but isomers wherein the methyl group is attached to other positions will usually be present as well. Esters resulting from such mixtures of aliphatic alkanol isomers are included in the scope of the invention.

It is further to be noted that the fatty acids are natural products, which has the consequence, as is well known, that they consist of a mixture of various chain lengths, with the emphasis on the indicated value, *i.e.* a C8 fatty acid will accordingly also contain, apart from the majority of C8, also amounts of C6 and C10, or even some C4 or C12. It is thus to be understood that the chain length indicated for the fatty acid moiety is to be understood in the accepted sense in the art, namely that of a mixture of chain lengths distributed around the indicated value, with the chain length indicated being present as the largest fraction.

The slip agent is liquid at 25 °C. Slip agents with a higher melting point, say 55 °C and lower, but above about 30 °C are difficult to handle under industrial circumstances, as explained above. The use of at least one branched alkyl chain in the slip agent has the distinct advantage that the slip agent has a lower melting point than the material having a straight alkyl chain and the same number of carbon atoms.

The slip agent can be added to the polyester composition in various ways. It is possible to add the agent at some stage during the melt processing, prior to the moulding of the composition.

For example, the slip agent may be added directly to the resin by melt dosing at the point of extrusion, by conventional masterbatch addition or by incorporation using liquid colour systems.

The slip agent can be added as such or in admixture with other additives, as defined below. It is also possible to add the slip agent in the form of a concentrate thereof with a carrier material. A very suitable method comprises the use of the slip agent as liquid carrier for other additives, including dyes and pigments, to be incorporated into the polyester. This has the advantage that no other, extraneous, additives have to be used for the blending process. The polyester optionally can include additives that do not adversely affect the properties of the preforms or films prepared therefrom. The optional additives include, but are not limited to, stabilisers, e.g., antioxidants or ultraviolet light screening agents, extrusion aids, drying agents, fillers, anti-clogging agents, reheat agents, crystallisation aids, impact modifiers, additives designed to make the polymer more degradable or combustible, dyes, other pigments, and mixtures thereof. The optional additives are present in the polyester in an amount of 0 % to about 10 %, by weight of the polyester, individually, and 0 % to about 15 %, by weight of the polyester, in total. The dyes and other pigments may be used to provide a specific colour to the final product.

To achieve the required level of slip performance in polyesters, the slip agent is incorporated at levels of between 0.01 % and 2 % and preferably between 0.05 % and 0.5 % on the basis of the weight of the total polyester composition.

As indicated, the slip agent used according to the present invention has improved properties compared to the known slip agents, such as fatty amides like euracamide, oleamide, stearyl erucamide or ethylene bis(stearamide), and aliphatic esters or (acetylated) glycerol fatty acid esters like myristyl palmitate or (ethoxylated) glycerolmonostearate.

Examples of the improved properties are better resistance against decolourisation due to processing, improved (lower) surface resistance, less haze (which is also a measure of improved compatibility) and improved processing. Due to the higher effectivity the dosing level is lower when compared to the known slip agents, which creates a more cost effective solution. Further, it is not required to use a combination of two or more slip agents to achieve these effects.

As indicated the present invention is in the area of polyester processing. The polyesters to which the present invention applies are polyethylene terephthalate, virgin bottle grade polyethylene terephthalate, postconsumer polyethylene terephthalate, polyethylene terephthalate glycol-modified (PETG), polyethylene naphthalate, polybutylene terephthalate, and polylactic acid. These are well known plastics, prepared and processed in a manner well known to the skilled person.

The preferred polyester is a condensation product of a dibasic acid and a glycol. Typically, the dibasic acid comprises an aromatic dibasic acid, or ester or anhydride thereof, such as isophthalic acid, terephthalic acid, naphthalene-1,4-dicarboxylic acid, naphthalene-2,6-dicarboxylic acid, phthalic acid, phthalic anhydride, tetrahydrophthalic anhydride, trimellitic anhydride, diphenoxyethane-4,4'-dicarboxylic acid, diphenyl-4,4'-dicarboxylic acid, and mixtures thereof. The dibasic acid also can be an aliphatic dibasic acid or anhydride, such as adipic acid, sebacic acid, decane-1,10-dicarboxylic acid, fumaric acid, succinic anhydride, succinic acid, cyclohexanediacetic acid, glutaric acid, azeleic acid, and mixtures thereof. Other aromatic and aliphatic dibasic acids known to persons skilled in the art also can be used. Preferably, the dibasic acid comprises an aromatic dibasic acid, optionally further comprising up to about 20 %, by weight of the dibasic acid component, of an aliphatic dibasic acid.

The glycol, or diol, component of the polyester comprises ethylene glycol, propylene glycol, butane-1,4-diol, diethylene glycol, a polyethylene glycol, a polypropylene glycol, neopentyl glycol, a polytetramethylene glycol, 1,6-hexylene glycol, pentane-1,5-diol, 3-methyl-2,4-pentanediol, 2-methyl-1,4-pentanediol, 2,2,4-trimethyl-1,3-pentanediol, 2-ethyl-1,3-hexanediol, 2,2-diethyl-1,3-propanediol, 1,3-hexanediol, 1,4-di-(hydroxyethoxy)benzene, 2,2-bis(4-hydroxycyclohexyl)propane, 2,4-dihydroxy-1,1,3,3-tetramethylcyclobutane, 2,2-*bis*(3-hydroxyethoxyphenyl)propane, 2,2-*bis*(4-hydroxypropoxyphenyl)propane, 1,4-dihydroxymethylcyclohexane, and mixtures thereof. Additional glycols known to persons skilled in the art also can be used as the glycol component of the diluent polyester.

In particular, the polyester comprises PET, *e.g.* but not limiting, virgin bottle grade PET or postconsumer PET (PC-PET), polyethylene terephthalate glycol-modified (PETG), polyethylene naphthalate (PEN), polybutylene terephthalate (PBT), and mixtures thereof. Suitable polyesters also can include polymer linkages, side chains, and end groups different from the formal precursors of the simple polyesters previously specified.

Another polyester to be used in the present invention is polylactic acid (PLA); this material is also well known. A known synthesis route to PLA involves the ring-opening polymerization of lactide using metal catalysts (typically tin octoate) in either solution, suspension or in the melt.

The polyester composition is transparent. In order for the polyester composition to be transparent, the polyester composition comprises 85.0-99.99 % by weight of the composition of the polyester, preferably 90.0-99.9 % by weight, such as 93.0-99.5 % by weight, or 95-99 % by weight.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e.*, meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein.

For the purpose of clarity and a concise description features are described herein as part of the same or separate embodiments, however, it will be appreciated that the scope of the invention may include embodiments having combinations of all or some of the features described.

The invention is now elucidated on the basis of examples.

### Examples

### Example 1

25 gr preforms with 28 mm PCO (Plastic Closure Only) neck finish were produced with slip agent materials present in an amount of 0.2 wt.% in Invista T94N PET resin (Intrinsic Viscosity = 0.84 dl/g) on an Arburg Allrounder 320 (extruder temperature profile and hot runner temperatures were set to 285 °C), equipped with a Piovan T200 dryer and DB-60 control unit (PET was dried to a dew point of -45 °C).

The slip properties of the produced preforms with the different slip agent materials were evaluated by a test panel (N = 8) in a double blind test relative to natural preforms. The claimed Invention Sample (IN sample), #1 in Table 1, is an ester of an aliphatic alcohol (R-OH, where R is an 11-methyl-dodecane moiety) and an aliphatic fatty acid (R¹-COOH, where R¹ is a straight chain alkyl group having 10 to 18 carbon atoms). Preforms were tested after 24 hours to allow the preforms to cool down to room temperature.

The test panel was asked to evaluate 5 pairs of preforms, four samples with each a different slip agent and one sample without slip agent (known to the panel member). The test panel was requested to relatively rate the slip properties of the preforms on a scale from 0 to 5, where a rating of 0 is the natural preform and a rating of 5 is the preform with the best slip properties.

Evaluation was performed by holding two preforms at the neck piece with two hands without touching or contaminating the contact area, making surface contact with the two preforms and manually determine the slip properties relative to the natural preform pair. The results show a clear improvement of slip properties over known slip agents.

**Table 1**

| **#** | **Sample** | **Score** |
|---|---|---|
| **0** | Reference | 0.0 |
| **1** | IN sample | 4.5 |
| **2** | PEG 400 Dioleate | 2.1 |
| **3** | Acetylated triglyceride | 1.9 |
| **4** | Glycerol monostearate | 1.0 |

### Example 2

To quantitatively determine the slip effect, plaques with several slip agent samples were prepared via injection moulding and tested for slip properties using a test method adapted form ASTM D1894.

### Preparation of plaques

The plaques (70 × 50 × 2 mm) were prepared using the commercially available polyethylene terephthalate resin grade Polyclear T 94N (Intrinsic Viscosity = 0.84), processed on an Arburg 60T-3 (exact settings can be found in Table 2), The PET resin was dried at 170 °C for 4-6 hours to remove moisture. After drying, 1 kg of the PET resin was mixed in a polyethylene container together with the indicated amount of slip agent sample (see Table 4) by strongly shaking and tumbling the container to ensure a homogeneous blend.

The homogeneous blend was then dosed into the extruder throat using a funnel. The funnel was cleaned between different slip agent samples. Prior to a new sample dosing, the extruder was purged to remove any remaining slip agent samples from the previous run.

Plaques were collected while wearing disposable gloves and carefully stacked and stored in polyethylene bags to prevent contamination in order not to influence the slip performance tests.

**Table 2: Setting for the preparation of 70 × 50 × 2 mm plaques of polyethylene terephthalate**

| | | | |
|---|---|---|---|
| **Machine** | Arburg 60T-3 | | |
| **Mould** | 70 mm × 50 mm × 2 mm High Gloss | | |
| **Material** | Polyclear T 94N | | |

| **Process parameters** | (codes in brackets refer to Arburg process parameters in the control software) | **Unit** | |
|---|---|---|---|
| **Pre-drying** | Temperature | °C | 170 |
| | Dry time | hour | 4-6 |
| **Temperature** | Feed zone | °C | 60 |
| | Zone 1 | °C | 275 |
| | Zone 2 | °C | 280 |
| | Zone 3 | °C | 290 |
| | Zone 4 | °C | 290 |
| | Nozzle | °C | 290 |
| | Mould | °C | 20 |
| **Distance** | Dosing (S403) | mm | 25 |
| | Decompression (S412) | mm | 1 |
| | switch point (S305) | mm | 9 |
| **Pressures** | Injection pressure (P305) | bar | 1500 |
| | Holding pressure (P311) | bar | 750 |
| | back pressure (P403) | bar | 50 |
| | Clamp force (F132) | ton (kN/10) | 60 |
| **Times** | Holding pressure time 1 (t312) | s | 15 |
| | Cooling time (t400) | s | 15 |
| **Speeds** | Screw speed (V401I) | rpm | 75 |
| | Injection speed (v305) | mm/s | 10 |
| **Measured data** | Cyclus time (t4012) | s | 36.80 |
| | Dosing time (t4015) | s | 3.90 |
| | Injection time (t4018) | s | 2.30 |
| | Max. Injection pressure (P4055) | bar | 800.0 |
| | mass buffer (S4062) | mm | 7.40 |
| | Shot weight | g | 13.78 |

### Coefficient of friction measurement

The coefficient of friction measurements were based on ASTM D 1894. Minor changes had to be made due to a slightly different set up of equipment, these are shown in Table 3. The procedure makes use of a moving sled with a sample plaque moving over a stationary plane with a second sample plaque. The ratio of the force required to move one plaque over another to the total force applied normal to those surfaces gives the coefficient of friction. The kinetic coefficient of friction, which is the coefficient of friction once the plaques are in motion, was deemed most representative of the interaction of polyester articles in real life situations and therefore this value was used to compare the slip agent samples.

Plaques were handled using disposable gloves. One plaque was placed on double sided tape with the glossy side up, the MD side (50 mm side) pointing towards the test bench. On top of this another plaque was carefully placed, glossy side down, to which the sled was attached by double sided tape, TD side (70 mm side) of the plaque pointing towards the test bench to allow for the longest possible travel distance.

The sled and the plaque were then pulled over the bottom plaque with 150 mm/min and the data was recorded. New plaques were used for every test.

**Table 3: Settings used for coefficient of friction testing based on ASTM D1894**

| **Machine** | Universal test bench Zwick Z05 | |
|---|---|---|
| Load cell | 50 N | |
| Test speed | mm/min | 150 |

| **Test conditions** | | |
|---|---|---|
| Temperature | °C | 23 ± 2 |
| Humidity | % | 50 ± 10 |
| Travel distance | mm | 13 |
| Contact area | mm x mm | 50 × 50 |
| | Positioning | Crosswise MD on top of TD |
| Sled weight | g | 200 |

### Measurements

Plaques were measured approximately 1 hour after injection moulding after storage in a climate controlled environment, to exclude influence of temperature and moisture on the test results as much as possible. Each test was performed 5 times and new plaques were used for each test.

**Table 4: Measured kinetic coefficient of friction for plaques with potential slip agents**

| Sample | Concentration in plaque (%) | Kinetic Coefficient of friction | Kinetic Coefficient of friction (% of blank) |
|---|---|---|---|
| Blank | 0.0 | 0.34 | 100 |
| GMS 90 % | 0.2 | 0.31 | 91 |
| PEG 400 Dioleate | 0.2 | 0.35 | 103 |
| 2-ethylhexyl stearate | 0.2 | 0.31 | 91 |
| IN Sample | 0.1 | 0.29 | 85 |
| IN Sample | 0.2 | 0.23 | 68 |

The claimed Invention Sample (IN Sample) in Table 4, is an ester of an aliphatic alcohol (R-OH, where R is an 11-methyl-dodecane moiety) and an aliphatic fatty acid (R¹-COOH, where R¹ is a straight chain alkyl group having 10-18 carbon atoms). The results clearly show the added benefit of the IN Sample over the other candidates, already presenting better slip performance at half the dosing level.

## Claims

1. Film or preform for a bottle comprising a polyester material selected from the group of polyethylene terephthalate, virgin bottle grade polyethylene terephthalate, postconsumer polyethylene terephthalate, polyethylene terephthalate glycol-modified (PETG), polyethylene naphthalate, polybutylene terephthalate, and polylactic acid and at least one slip agent, said slip agent being an ester of an aliphatic alkanol having the formula R-OH, wherein R stands for a branched chain alkyl group having 12-18 carbon atoms, and an aliphatic fatty acid having the formula R¹-COOH, wherein R¹ stands for a straight chain alkyl group having 11-21 carbon atoms, and wherein the slip agent is liquid at 25 °C.

2. Film or preform for a bottle according to claim 1, wherein R¹ is a straight chain alkyl group, having 11-18 carbon atoms.

3. Film or preform for a bottle according to claim 1, wherein R¹ is a straight chain alkyl group, having 11-17 carbon atoms.

4. Film or preform for a bottle according to any one of claims 1-3, wherein R¹ is a straight chain alkyl group having 17 carbon atoms.

5. Film or preform for a bottle according to any one of claims 1-4, wherein R is an 11-methyl-dodecane moiety.

6. Polyester composition suitable for preparing a film or preform for a bottle, comprising a polyester material selected from the group of polyethylene terephthalate, virgin bottle grade polyethylene terephthalate, postconsumer polyethylene terephthalate, polyethylene terephthalate glycol-modified (PETG), polyethylene naphthalate, polybutylene terephthalate, and polylactic acid and at least one slip agent in an amount of 0.01-2 wt.% based on the weight of the polyester composition, said slip agent being an ester of aliphatic alkanol having the formula R-OH, wherein R stands for a branched chain alkyl group having 12-18 carbon atoms, and an aliphatic fatty acid having the formula R¹-COOH, wherein R¹ stands for a straight chain alkyl group having 11 to 21 carbon atoms, and wherein the slip agent is liquid at 25 °C, and wherein the polyester composition is transparent.

7. Polyester composition according to claim 6, wherein R¹ is a straight chain alkyl group having 11-18 carbon atoms.

8. Polyester composition according to claim 6 or 7, wherein R¹ is a straight chain alkyl group, having 11-17 carbon atoms.

9. Polyester composition according to any one of claims 6-8, wherein R¹ is a straight chain alkyl group having 17 carbon atoms.

10. Polyester composition according to any one of claims 6-9, wherein R is an 11-methyl-dodecane moiety.

11. Polyester composition according to any one of claims 6-10, wherein the slip agent is present in an amount of 0.05-0.5 wt.% based on the weight of the polyester composition.

12. Use of at least one ester of an aliphatic alkanol having the formula R-OH, wherein R stands for a branched chain alkyl group having 12-18 carbon atoms, and an aliphatic fatty acid having the formula R¹-COOH, wherein R¹ stands for a straight chain alkyl group having 11-21 carbon atoms, and wherein the ester is liquid at 25 °C, as a slip agent in a polyester composition, said polyester being selected form the group of polyethylene terephthalate, virgin bottle grade polyethylene terephthalate, postconsumer polyethylene terephthalate, polyethylene terephthalate glycol-modified (PETG), polyethylene naphthalate, polybutylene terephthalate, and polylactic acid, and wherein the polyester composition is transparent.

13. Use according to claim 12, wherein R¹ is a straight chain alkyl group having 11-18 carbon atoms.

14. Use according to claim 12 or 13, wherein R¹ is a straight chain alkyl group having 11-17 carbon atoms, preferably a straight chain alkyl group having 17 carbon atoms.

15. Use according to any one of claims 12-14, wherein R is an 11-methyl-dodecane moiety.

## Patentansprüche

1. Film oder Vorform für eine Flasche, umfassend ein Polyestermaterial, ausgewählt aus der Gruppe von Polyethylenterephthalat, nativem Flaschenqualitäts-Polyethylenterephthalat, Nach-Gebrauchs-Polyethylenterephthalat, Glykol modifiziertem Polyethylenterephthalat (PETG), Polyethylennaphthalat, Polybutylenterephthalat, und Polymilchsäure und wenigstens ein Gleitmittel, wobei das Gleitmittel ein Ester eines aliphatischen Alkanols mit der Formel R-OH ist, wobei R für eine verzweigtkettige Alkylgruppe mit 12 - 18 Kohlenstoffatomen steht, und einer aliphatischen Fettsäure mit der Formel R¹-COOH, wobei R¹ für eine geradkettige Alkylgruppe mit 11-21 Kohlenstoffatomen steht, und wobei das Gleitmittel bei 25 °C flüssig ist.

2. Film oder Vorform für eine Flasche nach Anspruch 1, wobei R¹ eine geradkettige Alkylgruppe mit 11 - 18 Kohlenstoffatomen ist.

3. Film oder Vorform für eine Flasche nach Anspruch 1, wobei R¹ eine geradkettige Alkylgruppe mit 11-17 Kohlenstoffatomen ist.

4. Film oder Vorform für eine Flasche nach einem der Ansprüche 1 - 3, wobei R¹ eine geradkettige Alkylgruppe mit 17 Kohlenstoffatomen ist.

5. Film oder Vorform für eine Flasche nach einem der Ansprüche 1 - 4, wobei R eine 11-Methyldodecan-Einheit ist.

6. Polyesterzusammensetzung, geeignet zum Herstellen eines Films oder einer Vorform für eine Flasche, umfassend ein Polyestermaterial, ausgewählt aus der Gruppe von Polyethylenterephthalat, nativem Flaschenqualitäts-Polyethylenterephthalat, Nach-Gebrauchs-Polyethylenterephthalat, Glykolmodifiziertem Polyethylenterephthalatt (PETG), Polyethylennaphthalat, Polybutylenterephthalat, und Polymilchsäure und wenigstens ein Gleitmittel in einer Menge von 0,01 - 2 Gew.-%, basierend auf dem Gewicht der Polyesterzusammensetzung, wobei das Gleitmittel ein Ester aus aliphatischem Alkanol mit der Formel R-OH ist, wobei R für eine verzweigtkettige Alkylgruppe mit 12 - 18 Kohlenstoffatomen steht, und einer aliphatischen Fettsäure mit der Formel R¹-COOH, wobei R¹ für eine geradkettige Alkylgruppe mit 11 bis 21 Kohlenstoffatomen steht, ist und wobei das Gleitmittel bei 25 °C flüssig ist, und wobei die Polyesterzusammensetzung transparent ist.

7. Polyesterzusammensetzung nach Anspruch 6, wobei R¹ eine geradkettige Alkylgruppe mit 11 - 18 Kohlenstoffatomen ist.

8. Polyesterzusammensetzung nach Anspruch 6 oder 7, wobei R¹ eine geradkettige Alkylgruppe mit 11-17 Kohlenstoffatomen ist.

9. Polyesterzusammensetzung nach einem der Ansprüche 6 - 8, wobei R¹ eine geradkettige Alkylgruppe mit 17 Kohlenstoffatomen ist.

10. Polyesterzusammensetzung nach einem der Ansprüche 6 - 9, wobei R eine 11-Methyldodecan-Einheit ist.

11. Polyesterzusammensetzung nach einem der Ansprüche 6 - 10, wobei das Gleitmittel in einer Menge von 0,05 - 0,5 Gew.-%, basierend auf dem Gewicht der Polyesterzusammensetzung, vorhanden ist.

12. Verwendung von wenigstens einem Ester eines aliphatischen Alkanols mit der Formel R-OH, wobei R für eine verzweigtkettige Alkylgruppe mit 12 - 18 Kohlenstoffatomen steht, und einer aliphatischen Fettsäure mit der Formel R¹-COOH, wobei R¹ für eine geradkettige Alkylgruppe mit 11 - 21 Kohlenstoffatomen steht, und wobei der Ester bei 25°C als ein Gleitmittel in einer Polyesterzusammensetzung flüssig ist, wobei der Polyester aus der Gruppe ausgewählt ist von Polyethylenterephthalat, nativem-Flaschenqualität-Polyethylenterephthalat, Nach-Gebrauchs-Polyethylenterephthalat, Glykol modifiziertem Polyethylenterephthalat (PETG), Polyethylennaphthalat, Polybutylenterephthalat und Polymilchsäure, und wobei die Polyesterzusammensetzung transparent ist.

13. Verwendung nach Anspruch 12, wobei R¹ eine geradkettige Alkylgruppe mit 11 - 18 Kohlenstoffatomen ist.

14. Verwendung nach Anspruch 12 oder 13, wobei R¹ eine geradkettige Alkylgruppe mit 11-17 Kohlenstoffatomen ist, vorzugsweise eine geradkettige Alkylgruppe mit 17 Kohlenstoffatomen.

15. Verwendung nach einem der Ansprüche 12 - 14, wobei R eine 11-Methyldodecan-Einheit ist.

## Revendications

1. Film ou préforme pour une bouteille comprenant un matériau de polyester choisi dans le groupe de poly(éthylène téréphtalate) poly(éthylène téréphtalate) de qualité bouteille vierge, poly(éthylène téréphtalate) de postconsommation, poly(éthylène téréphtalate) glycol-modifié (PETG), poly(éthylène naphtalate), poly(butylène téréphtalate), et poly(acide lactique) et au moins un agent de glissement, ledit agent de glissement étant un ester d'un alcanol aliphatique ayant la formule R-OH, où R représente un groupe alkyle à chaîne ramifiée ayant 12-18 atomes de carbone, et un acide gras aliphatique ayant la formule R¹-COOH, où R¹ représente un groupe alkyle à chaîne linéaire ayant 11-21 atomes de carbone, et où l'agent de glissement est liquide à 25°C.

2. Film ou préforme pour une bouteille selon la revendication 1, où R¹ est un groupe alkyle à chaîne linéaire, ayant 11-18 atomes de carbone.

3. Film ou préforme pour une bouteille selon la revendication 1, où R¹ est un groupe alkyle à chaîne linéaire, ayant 11-17 atomes de carbone.

4. Film ou préforme pour une bouteille selon l'une quelconque des revendications 1-3, où R¹ est un groupe alkyle à chaîne linéaire ayant 17 atomes de carbone.

5. Film ou préforme pour une bouteille selon l'une quelconque des revendications 1-4, où R est une moitié 11-méthyl-dodécane.

6. Composition de polyester appropriée pour la préparation d'un film ou d'une préforme pour une bouteille, comprenant un matériau de polyester choisi dans le groupe de poly(éthylène téréphtalate), poly(éthylène téréphtalate) de qualité bouteille vierge, poly(éthylène téréphtalate) de postconsommation, poly(éthylène téréphtalate) glycol-modifié (PETG), poly(éthylène naphtalate), poly(butylène téréphtalate) et poly(acide lactique) et au moins un agent de glissement dans une quantité de 0,01-2 % en masse sur la base de la masse de la composition de polyester, ledit agent de glissement étant un ester d'alcanol aliphatique ayant la formule R-OH, où R représente un groupe alkyle à chaîne ramifiée ayant 12-18 atomes de carbone, et un acide gras aliphatique ayant la formule R¹-COOH, où R¹ représente un groupe alkyle à chaîne linéaire ayant 11 à 21 atomes de carbone, et où l'agent de glissement est liquide à 25°C, et où la composition de polyester est transparente.

7. Composition de polyester selon la revendication 6, où R¹ est un groupe alkyle à chaîne linéaire ayant 11-18 atomes de carbone.

8. Composition de polyester selon la revendication 6 ou 7, où R¹ est un groupe alkyle à chaîne linéaire ayant 11-17 atomes de carbone.

9. Composition de polyester selon l'une quelconque des revendications 6-8, où R¹ est un groupe alkyle à chaîne linéaire ayant 17 atomes de carbone.

10. Composition de polyester selon l'une quelconque des revendications 6-9, où R est une moitié 11-méthyl-dodécane.

11. Composition de polyester selon l'une quelconque des revendications 6-10, où l'agent de glissement est présent dans une quantité de 0,05-0,5 % en masse sur la base de la masse de la composition de polyester.

12. Utilisation d'au moins un ester d'un alcanol aliphatique ayant la formule R-OH, où R représente un groupe alkyle à chaîne ramifiée ayant 12-18 atomes de carbone, et un acide gras aliphatique ayant la formule R¹-COOH, où R¹ représente un groupe alkyle à chaîne linéaire ayant 11-21 atomes de carbone, et
où l'ester est liquide à 25°C, comme un agent de glissement dans une composition de polyester, ledit polyester étant choisi dans le groupe de poly(éthylène téréphtalate), poly(éthylène téréphtalate) de qualité bouteille vierge, poly(éthylène téréphtalate) de postconsommation, poly(éthylène téréphtalate) glycol-modifié (PETG), poly(éthylène naphtalate), poly(butylène téréphtalate), et poly(acide lactique), et où la composition de polyester est transparente.

13. Utilisation selon la revendication 12, où R¹ est un groupe alkyle à chaîne linéaire ayant 11-18 atomes de carbone.

14. Utilisation selon la revendication 12 ou 13, où R¹ est un groupe alkyle à chaîne linéaire ayant 11-17 atomes de carbone, de préférence un groupe alkyle à chaîne linéaire ayant 17 atomes de carbone.

15. Utilisation selon l'une quelconque des revendications 12-14, où R est une moitié 11-méthyl-dodécane.
